(19) Europäisches Patentamt

European Patent Office

Office européen des brevets

(11) **EP 0 993 695 B1**

(12) **EUROPÄISCHE PATENTSCHRIFT**

(45) Veröffentlichungstag und Bekanntmachung des Hinweises auf die Patenterteilung:
**01.03.2006 Patentblatt 2006/09**

(51) Int Cl.:
*H02H 3/44* *(2006.01)*    *G01R 31/02* *(2006.01)*

(21) Anmeldenummer: **98943650.6**

(22) Anmeldetag: **08.07.1998**

(86) Internationale Anmeldenummer:
**PCT/DE1998/001884**

(87) Internationale Veröffentlichungsnummer:
**WO 1999/003183 (21.01.1999 Gazette 1999/03)**

(54) **VERFAHREN UND ANORDNUNG ZUR ERKENNUNG VON KURZSCHLÜSSEN IN NIEDERSPANNUNGSNETZEN**

METHOD AND SYSTEM FOR DETECTING SHORT-CIRCUITS IN LOW-VOLTAGE MAINS

PROCEDE ET SYSTEME POUR LA DETECTION DE COURTS-CIRCUITS DANS DES RESEAUX BASSE TENSION

(84) Benannte Vertragsstaaten:
**DE FR IT**

(30) Priorität: **10.07.1997 DE 19729599**

(43) Veröffentlichungstag der Anmeldung:
**19.04.2000 Patentblatt 2000/16**

(73) Patentinhaber: **SIEMENS AKTIENGESELLSCHAFT**
**80333 München (DE)**

(72) Erfinder: **GRIEPENTROG, Gerd**
**D-91058 Erlangen (DE)**

(56) Entgegenhaltungen:
**EP-A- 0 838 887        DE-A- 3 642 136**

• **RIVETTI G. ET AL.: "Intelligenz in Niederspannungs Leistungsschaltern" ABB TECHNIK, Nr. 4, 1997, Seiten 41-46, XP002086696 in der Anmeldung erwähnt**
• **LINDMAYER M ET AL: "DIGITALE ALGORITHMEN ZUR FRUEHZEITIGEN KURZSCHLUSSERKENNUNG" ELEKTROTECHNISCHE ZEITSCHRIFT - ETZ, Bd. 112, Nr. 13 / 14, 1. Juli 1991, Seiten 718, 720-722, XP000258565 in der Anmeldung erwähnt**

EP 0 993 695 B1

## Beschreibung

Die Erfindung bezieht sich auf ein Verfahren zur Erkennung von Kurzschlüssen in Niederspannungsnetzen unter Verwendung von ausgewählten Schaltkriterien, wobei insbesondere der Augenblickswert des Stromes und die Stromsteilheit erfaßt und als Abschaltkriterien verwendet werden, wozu die Stromsteilheit des Stromes als Funktion des Stromes dargestellt und in dieser Ortskurvendarstellung Einhüllende abgeleitet werden, die alle im Nennbetrieb möglichen Ortskurven einschließen, wobei durch Überlagerung der Einhüllenden eine resultierende Einhüllende gebildet wird. Daneben bezieht sich die Erfindung auch auf eine zugehörige Anordnung mit Mitteln zur Durchführung des Verfahrens mit Auswertemitteln, die analog, digital und/oder hybrid ausgelegt ist.

Kurzschlüsse in Niederspannungs (NS)-Anlagen sind mit hohen elektrodynamischen und thermischen Beanspruchungen sowohl der nachgeordneten Anlagenteile, wie Leitungen, Kabel, Sammelschienensysteme od. dgl., als auch des die Abschaltung ausführenden Leistungsschalters verbunden. Die Beanspruchungshöhe wird maßgeblich durch den Zeitraum vom Auftreten des Kurzschlusses bis zu seiner Abschaltung bestimmt. Ein Teil dieser Zeit wird für die reine Erfassung des unzulässigen Betriebszustandes benötigt und als sog. Kurzschlußerkennungszeit bezeichnet. Angestrebt wird eine gegenüber verschiedenen Netzparametern, insbesondere dem Leistungsfaktor, tolerante Methode, die eine schnelle Erkennung von Kurzschlüssen erlaubt.

Zur Kurzschlußerkennung sind bisher eine Reihe von Verfahren vorgeschlagen worden:

- Konventionell wird die Höhe des Stromes i durch magnetische und/oder thermische Auslöser bewertet und bei Überschreitung eines Grenzwertes eine Abschaltung ausgelöst (i-Kriterium). Da der Strom durch die Netzinduktivitäten stetig ist, vergeht immer ein gewisser Zeitraum, bis der Strom über den Grenzwert angestiegen ist und somit der Kurzschluß erkannt wird. Ein weiterer Nachteil besteht darin, daß auf der Grundlage des Stoßfaktors $\kappa$ ein weit (praktisch Faktor $\geq 3$) über dem Nenn-Effektivstrom gelegener Grenzwert eingestellt werden muß, um unerwünschte Auslösungen zu verhindern. Damit ist es möglich, daß "schwache" Kurzschlüsse nie erkannt werden. Durch mechanische und insbesondere thermische Trägheiten der Auslöser tritt eine zusätzliche Verzögerung ein. Um dies zu kompensieren, wurden auf der Grundlage der ausschließlichen Strombewertung (i-Kriterium) zahlreiche elektronische Auslöser konzipiert, die einen trägheitsarmen bzw. trägheitslosen Vergleich von Ist-Strom und Auslöse-Grenzwert vornehmen.

- In etz 112 (1991), S. 718 bis 722 wird ein Algorithmus vorgeschlagen, der neben dem Strom i auch die Stromsteilheit di/dt zur Erkennung eines Kurzschlusses heranzieht. Eine Auslösung wird vorgenommen, wenn die folgende Bedingung, die als Extrapolationskriterium bezeichnet wird, erfüllt ist:

$$\frac{1}{I_N} \cdot \left| i + \tau_N \cdot \frac{di}{dt} \right| > G_{Extra} = \frac{\sqrt{2}}{\cos \varphi_N} \Rightarrow \text{Kurzschluß, wobei} \tag{1}$$

IN: Nennstrom (Effektivwert)

$\varphi_N$: Phasenverschiebung des Nennstromkreises

$\tau_N$: Zeitkonstante des Nennstromkreises = $\tan(\varphi_N)/(2\pi f)$

$G_{Extra}$: Auslöse-Grenzwert

bedeuten.

In einem Diagramm mit dem Strom i als Abszisse und der Stromsteilheit di/dt als Ordinate stellt oben angegebene Gleichung (1) eine Gerade dar.

Gegenüber allen anderen bekannten Verfahren, die Strom i und Stromsteilheit di/dt zur Kurzschlußerkennung heranziehen, ist das Extrapolationskriterium in den Erkennungseigenschaften, wie Erkennungszeit, Stromwärmeintegral, Strom zum Erkennungszeitpunkt, optimal. Gegenüber einer Umschaltung der Stromstärke innerhalb der zulässigen Grenzwerte reagiert das Extrapolationskriterium stabil.

Nachteilig ist bei diesem Verfahren, daß zur Adaption des Verfahrens der Leistungsfaktor des zu schützenden Netzes im Nennbetrieb bekannt sein muß. Dies erfordert bekannte und starre Netzverhältnisse, da durch wechselnde Last das Verfahren fehlangepaßt wird und evtl. unberechtigte Auslösungen hervorgerufen werden können.

- Ein gegenüber verschiedenen Leistungsfaktoren in bestimmten Intervallgrenzen unempfindliches Verfahren, das ebenfalls Strom und Stromsteilheit zur Kurzschlußerkennung heranzieht, gibt die DE 36 42 136 C1 an. Alle möglichen Konstellationen von Strom und Stromsteilheit, die während des Einschaltens (sog. Draufschaltung) eines Stromkreises mit Leistungsfaktoren von beispielsweise cos φ = 0,2 ... 0,95 auftreten können, werden in einem gemeinsamen Diagramm, d.h. Strom i auf der Abszisse und Stromsteilheit di/dt auf der Ordinate, als Ortskurven aufgetragen. Da in der DE 36 42 136 C2 sämtliche Ortskurven auf der Ordinate mit i gleich Null beginnen, muß davon ausgegangen werden, daß vor der Schalthandlung kein Strom floß, demzufolge also kein Vorstrom vorliegt. Bei diesem Stand der Technik entsteht um die resultierende Kurvenschar eine Einhüllende, die als sog. Schwellenwertfunktion deklariert wird. Eine Konstruktionsvorschrift der Einhüllenden wird in der DE 36 42 136 C1 jedoch nicht angegeben. Verläßt ein Beobachtungspunkt, ausgedrückt durch das Wertepaar Strom/Stromsteilheit, das durch die Schwellenwertfunktion umrandete Gebiet, führt dies zur Auslösung.

Nicht beachtet werden können in der DE 36 42 136 C1 solche Schaltvorgänge, bei denen ein Vorstrom floß, d.h. eine sog. Umschaltung stattfindet, wobei sich Leistungsfaktor und/oder Strom durch die Schalthandlung innerhalb zulässiger Grenzen verändern. Diese in der Praxis mit hoher Wahrscheinlichkeit auftretenden Betriebsfälle können unter gewissen Umständen bei bestimmten Schaltphasenwinkel die in der DE 36 42 136 C1 zur Ausführung des dort beschriebenen Verfahrens angegebenen Schaltmittel zu einer grundlosen Auslösung bringen.

Weiterhin wird in ABB Technik 4/1997, Seite 41, vorgeschlagen, Abschaltkriterien für Niederspannungsschalter durch geeignete Algorithmen weiterzuentwickeln, um einen entstehenden Kurzschluß im Mikrosekundenbereich zu erfassen. Ziel ist es dort, in elektrischen Verteilungsnetzen mit Niederspannungsanlagen bei Auftreten eines Fehlerfalls eine möglichst rasche Trennung des Fehlers und eine Trennung nur des fehlerbehafteten Teils der Anlage herbeizuführen sowie die Ausfallzeit und den Schaden auf ein Minimum zu begrenzen.

Aufgabe der Erfindung ist es demgegenüber, ein Verfahren vorzuschlagen, mit dem unter allen denkbaren Betriebsbedingungen eine stabile Arbeitsweise bei der Erkennung von Kurzschlüssen garantiert wird. Dazu soll eine zugehörige Anordnung geschaffen werden.

Die Aufgabe ist erfindungsgemäß bei einem Verfahren der eingangs genannten Art dadurch gelöst, daß eine solche Einhüllende gebildet wird, die neben den verschiedenen Schaltzeitpunkten und Leistungsfaktoren einen beliebigen Vorstrom innerhalb des regulären Betriebsbereiches berücksichtigt, wozu

- zunächst separate Einhüllende für den unteren Leistungsfaktor einerseits und den oberen Leistungsfaktor andererseits gebildet werden, wobei jeweils alle Schaltwinkel eingeschlossen sind,
- zusätzlich eine weitere Einhüllende ermittelt wird, welche die Nennstromumschaltungen zwischen beiden Grenzleistungsfaktoren berücksichtigt,
- die so erhaltenen Einhüllenden zusammengefaßt und zur resultierenden Einhüllenden überlagert werden, welche ein Tolerantes-Ortskurven-Kriterium (TOK), das vom Leistungsfaktor und Vorstrom unabhängig ist, verkörpert,

und daß bei Werten außerhalb des Toleranten-Ortskurven-Kriteriums (TOK)⁻ ein Kurzschluß angezeigt wird.

Mit dem beschriebenen Verfahren ist ein Algorithmus geschaffen, der vorteilhafterweise unter allen denkbaren Betriebsweisen arbeitet und der außer vom Leistungsfaktor des zu schützenden Netzes auch von vorhergehenden Schalthandlungen unabhängig ist. Damit werden wesentlich bessere Eigenschaften als beim konventionellen Verfahren erzielt.

Zugehörige Anordnungen mit Mitteln zur Durchführung des erfindungsgemäßen Verfahrens können alternativ mit analogen, digitalen oder hybriden Auswertemitteln arbeiten. Insbesondere ist bei einer erfindungsgemäßen Anordnung ein Sensor zur Messung der Stromsteilheit vorhanden, dem ein Filter, ein Analog-Digital-Wandler, eine Einheit zur Pegelanpassung nachgeschaltet ist, von der erstes Signal für die Stromsteilheit und über eine Summiereinheit ein zweites Signal für den Augenblickswert des Stromes auf eine digital arbeitende Auswerteeinheit mit darin abgespeichertem Toleranten-Ortskurven-Kriterium gegeben wird. Von der Auswerteeinheit wird ein Auslöser für den jeweils verwendeten Schalter angesteuert.

Weitere Einzelheiten und Vorteile der Erfindung ergeben sich aus der nachfolgenden Figurenbeschreibung von Ausführungsbeispielen anhand der Zeichnung in Verbindung mit weiteren Patentansprüchen. Es zeigen

Figur 1    in einer graphische Darstellung die Ortskurven-Einhüllenden bei unterschiedlichen Leistungsfaktoren,

Figur 2    die resultierende Einhüllende eines toleranten Ortskurven-Kriteriums

Figur 3    das durch einen Polygonzug gegebene vereinfachte Abschaltkriterium

Figur 4    eine Schaltungsanordnung zur Realisierung der Kurzschlußfrüherkennung mit dem toleranten Ortskurven-Kriterium.

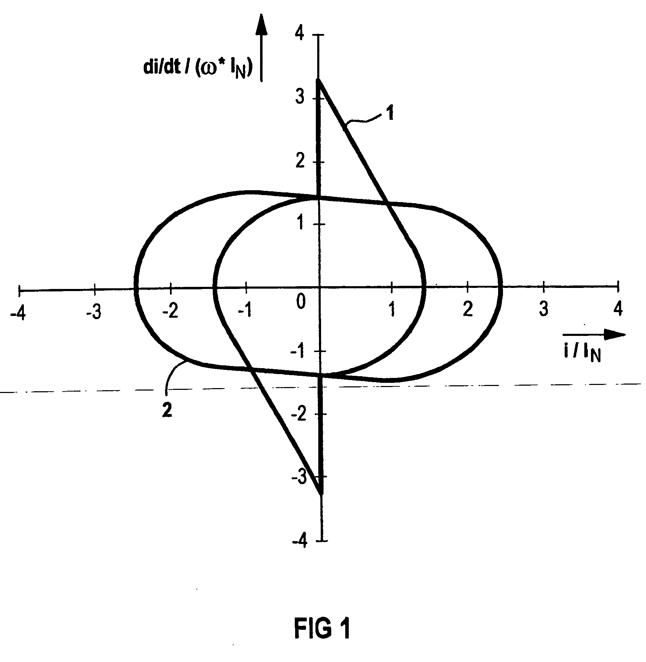

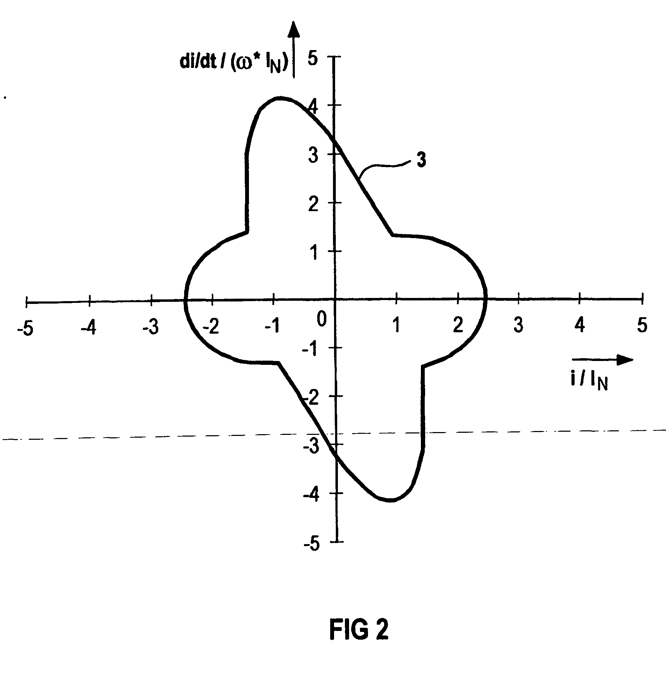

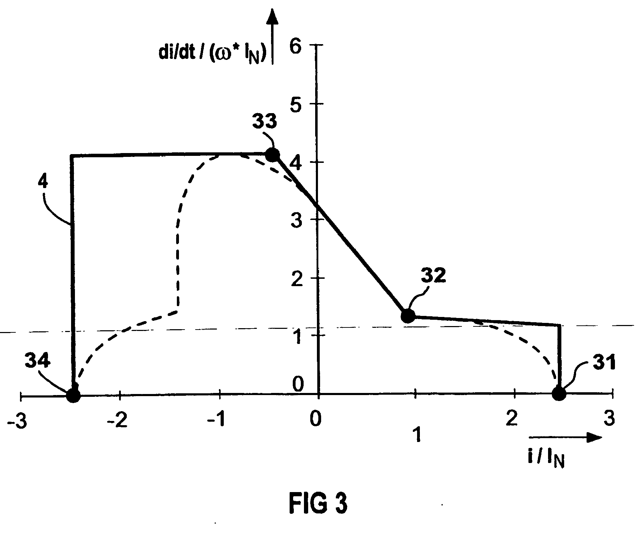

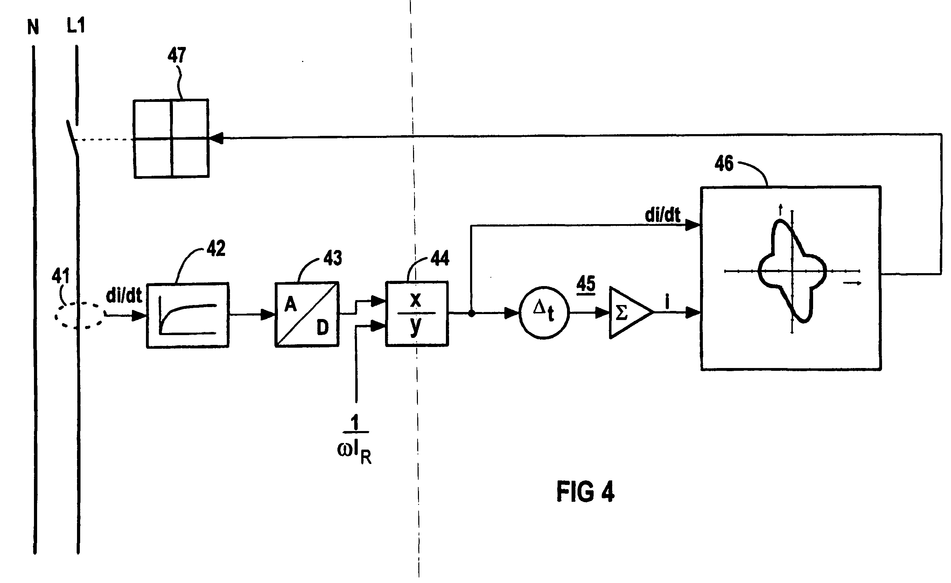

Die Figuren werden teilweise gemeinsam beschrieben. Dabei dienen insbesondere die Figuren 1 und 2 dazu, die neue Methodik aufzuzeigen und die Verbesserung gegenüber dem Stand der Technik zu verdeutlichen, und Figur 3 ein vereinfachtes Abschaltkriterium anzugeben, wogegen Figur 4 eine praktische Umsetzung des Verfahrens angibt.

Bei der Erfindung wird vorausgesetzt, daß sich der Leistungsfaktor des zu schützenden Netzes bei Nennbetrieb in einem bestimmten Intervall (z. B. cos φ = 0,1 ... 0,9) aufhält.

Eine Darstellung der zunächst voneinandner unabhängigen Einhüllenden 1 und 2 für die Einschaltung des Nennstromkreises mit jeweils unterem Leistungsfaktor (z. B. cos φ = 0,1) und oberem Leistungsfaktor (z. B. cos φ = 0,9) zeigt Figur 1. In Figur 1 ist auf der Abszisse $1/I_n$ und auf der Ordinate $1/(\omega \cdot I_n) \cdot di/dt$ aufgetragen.

Werden anschließend alle möglichen Konstellationen aus Strom und Stromsteilheit (Ortskurven im i-di/dt-Diagramm) betrachtet, die bei

- Einschaltung des Nennstromkreises unter verschiedenen Leistungsfaktoren
- Veränderung des Leistungsfaktors im Nennbetrieb
- Veränderung der Stromstärke im Nenn-Bereich, d.h. Umschaltung

sowie durch Kombination der genannten Punkte auftreten, dann sind alle praktisch möglichen Betriebsfälle eingeschlossen und es entsteht eine resultierende Einhüllende 3 als äußere Begrenzung der Ortskurvenschar. Diese resultierende Einhüllende ist in Figur 2 dargestellt, womit sowohl alle Ortskurven bei beliebigen Schaltwinkeln als auch die daraus für verschiedene Leistungsfaktoren resultierenden Einhüllenden in einer gemeinsamen Einhüllenden berücksichtigt sind.

Liegt während des Anlagenbetriebes ein i-di/dt-Betriebspunkt außerhalb der so gebildeten Einhüllenden, muß ein Kurzschluß vorliegen. Wegen der in vorgegebenen Grenzen nunmehr gegebenen Unabhängigkeit von Leistungsfaktor und Vorstrom wird dieses Entscheidungsmerkmal im weiteren als tolerantes Ortskurven-Kriterium *(TOK-Kriterium)* bezeichnet.

Eingehende Untersuchungen zeigen, daß das TOK-Kriterium folgende Eigenschaften besitzt:

- In allen Bereichen ist das TOK-Kriterium besser als das i-Kriterium.
- Mit zunehmender Kurzschlußstromstärke nähert sich das TOK-Kriterium für alle Leistungsfaktoren dem Extrapolationskriterium.
- Für Leistungsfaktoren an der oberen Bemessungsgrenze des TOK-Kriteriums und Kurzschlußströmen mit $I_K > 2 \cdot I_N$ unterscheiden sich TOK-Kriterium und Extrapolationskriterium kaum.

Bei Kenntnis der konkreten Netzverhältnisse kann durch Einengung des Bereiches der möglichen Leistungsfaktoren eine Annäherung des TOK-Kriteriums an das Extrapolationskriterium erzielt werden.

Der Einfluß von Oberwellen im Netz wird durch Aufweitung der Einhüllenden, allerdings bei gleichzeitiger Verschlechterung der Erkennungseigenschaften, kompensiert. Eine spezifische Methode insbesondere zur Beherrschung von Strom-Peaks besteht darin, erst dann auf einen Kurzschluß zu erkennen, wenn sich der Betriebspunkt des Stromkreises eine bestimmte Zeit bzw. Anzahl von Abtastwerten außerhalb des TOK-Kriteriums befindet.

Durch Erweiterung des Extrapolationskriteriums erhält man eine vereinfachte Variante des TOK-Kriteriums. Ein Kurzschluß gilt nur dann als erkannt, wenn das Extrapolationskriterium für beide Grenzen des Leistungsfaktor-Intervalles, beispielsweise cos φ = 0,1 und 0,9, überschritten ist. Dies läßt sich formulieren mit:

$$\frac{1}{I_N} \cdot \left| i + \max(\tau_N) \cdot \frac{di}{dt} \right| > \max(G_{Extra}) = \frac{\sqrt{2}}{\min(\cos \varphi_N)} \qquad (2a)$$

und

$$\frac{1}{I_N} \cdot \left| i + \min(\tau_N) \cdot \frac{di}{dt} \right| > \min(G_{Extra}) = \frac{\sqrt{2}}{\max(\cos \varphi_N)} \qquad (2b)$$

Während das reguläre Gebiet des urprünglichen TOK-Kriteriums innerhalb eines komplizierteren Gebildes liegt, sind für das vereinfachte TOK-Kriterium lediglich die beiden Grenzgeraden zu betrachten. Mit dieser Vereinfachung ist allerdings eine geringfügige Verschlechterung der Erkennungseigenschaften verbunden.

Um das vereinfachte TOK-Kriterium zu realisieren, wird die resultierende Einhüllende 32 nach Figur 2 durch einen Polygonzug 4 angenähert. Für die obere Halbebene zeigt Figur 3 eine solche Polygon-Approximation, die durch zentralsymmetrische Spiegelung auf die untere Halbebene vervollständigt wird.

Der in Figur 3 gezeigte Polygonzug 4 enthält charakteristische Punkte. Hierbei

- ist der auf den Nennstrom bezogene Stromwert des Punktes 31 bzw. 34 durch den maximal/minimal möglichen Strom gegeben und dieser jeweilige Stromwert kann durch Verwendung des auf den unteren Grenz-Leistungsfaktor bezogenen Stoßfaktors κ gewonnen werden
- ist Punkt 32 der Schnittpunkt der aus den beiden Extrapolationskriterien entstehenden Geraden; der Stromwert in Punkt 32 ergibt sich zu:

$$\frac{I_2}{I_N} = \sqrt{2} \cdot \frac{\sin\varphi_u - \sin\varphi_o}{\sin(\varphi_u - \varphi_o)} \tag{3a}$$

die Stromsteilheit in Punkt 32 ergibt sich zu:

$$\frac{(dI/dt)_2}{\omega \cdot I_N} = \frac{\sqrt{2}}{\sin\varphi_u} - \frac{I_2}{I_N \cdot \tan\varphi_u} \tag{3b}$$

wobei

$(dI/dt)_2$:     Stromsteilheit in Punkt 32
$I_2$:     Stromwert in Punkt 32
$\varphi_u$:     Phasenverschiebung bei unterem Grenzleistungsfaktor
$\varphi_o$:     Phasenverschiebung bei oberem Grenzleistungsfaktor

bedeuten.
- ist Punkt 33 der Ort des maximalen Stromanstieges, dessen Stromsteilheit sich zu:

$$\frac{(dI/dt)_3}{\omega \cdot I_N} = \frac{\sqrt{2}}{\sin\varphi_o} \qquad\qquad \text{für } 2 \cdot \cos\varphi_u \geq \cos\varphi_o$$

und $$\tag{4a}$$

und

$$\frac{(dI/dt)_3}{\omega \cdot I_N} = \frac{\sqrt{2} \cdot \left[\sin\psi_{max} - \cos\varphi_o \cdot \sin(\psi_{max} - \varphi_u)\right]}{\sin\varphi_o} \quad \text{für } 2 \cdot \cos\varphi_u < \cos\varphi_o$$

$$\frac{I_3}{I_N} = \frac{\sqrt{2}}{\cos\varphi_o} - \frac{(dI/dt)_3}{\omega \cdot I_N} \cdot \frac{1}{\tan\varphi_o} \tag{4b}$$

ergeben, wobei

$(dI/dt)_3$:     Stromsteilheit in Punkt 33
$I_3$:     Stromwert in Punkt 33

$\psi_{max}$: der auf die Netzspannung bezogene Schaltwinkel mit nachfolgend maximaler Stromsteilheit gemäß

$$\psi_{max} = \arctan\left(\frac{1 - \cos\varphi_o \cdot \cos\varphi_u}{\cos\varphi_o \cdot \sin\varphi_u}\right) \qquad (5)$$

bedeuten.

In Figur 4 ist eine Anordnung zur Kurzschlußfrüherkennung mit dem TOK-Kriterium für eine beliebige Schalteinrichtung im einzelnen dargestellt. Zur Realisierung des beschriebenen Verfahrens kann auf übliche Schaltmittel zurückgegriffen werden. Entsprechende Anordnungen können rein analog, rein digital oder aber hybrid arbeiten, wobei sich letzteres anbietet.

In Figur 4 ist ein Sensor 41 zur Messung der Stromsteilheit di/dt, z. B. eine Rogowski-Spule, oder der Stromstärke i, ein A/D-Umsetzer 43 mit vorgeschaltetem Antialiasing-Filter 42, eine Pegelanpassung 44 zur gleichzeitigen Einstellung der Nennstromstärke, eine Summiereinheit 45 zur Berechnung des Stromes i aus der Stromsteilheit di/dt bzw. alternativ eine Differenziereinheit zur Berechnung der Stromsteilheit di/dt aus der Stromstärke i sowie eine digital arbeitende Auswerteeinheit 46, welche die gemessenen Werte mit dem TOK-Kriterium vergleicht und bei Erkennung eines Kurzschlusses einen Auslöser 47 ansteuert, vorhanden.

Die Anordnung gemäß Figur 4 kann zur schnellen Erkennung von Kurzschlüssen in NS-Netzen in Verbindung mit beliebigen Schaltern eingesetzt werden.

## Patentansprüche

1. Verfahren zur Erkennung von Kurzschlüssen in Niederspannungsnetzen unter Verwendung von ausgewählten Schaltkriterien, wobei insbesondere der Augenblickswert des Stromes (i) und die Stromsteilheit (di/dt) erfaßt und als Abschaltkriterien verwendet werden, wozu die Stromsteilheit (di/dt) als Funktion des Stromes (i) dargestellt und in dieser Ortskurvendarstellung Einhüllende abgeleitet werden, die alle im regulären Betrieb möglichen Ortskurven einschließen, wobei durch Überlagerung der Einhüllenden eine resultierende Einhüllende gebildet wird, die neben verschiedenen Schaltzeitpunkten und Leistungsfaktoren einen beliebigen Vorstrom innerhalb des regulären Betriebsbereiches berücksichtigt, wozu

   - zunächst separate Einhüllende für den unteren Leistungsfaktor einerseits und den oberen Leistungsfaktor andererseits-gebildet werden, wobei jeweils alle Schaltwinkel eingeschlossen sind,
   - zusätzlich eine weitere Einhüllende ermittelt wird, welche die Nennstromumschaltungen zwischen beiden Grenzleistungsfaktoren berücksichtigt,
   - die so erhaltenen Einhüllenden zusammengefaßt und zur resultierenden Einhüllenden überlagert werden, welche ein Tolerantes-Ortskurven-Kriterium (TOK), das vom Leistungsfaktor und Vorstrom unabhängig ist, verkörpert,

   und daß bei Werten außerhalb des Toleranten-Ortskurven-Kriteriums (TOK) ein Kurzschluß angezeigt wird.

2. Verfahren nach Anspruch 1, **dadurch gekennzeichnet, daß** das Abschaltkriterium durch Erweiterung von Extrapolationskriterien vereinfacht wird und daß ein Kurzschluß dann erkannt wird, wenn das Extrapolationskriterium für beide Grenzwerte des Leistungsfaktor-Intervalls erfüllt ist, wobei folgende Gleichungen gelten:

$$\frac{1}{I_N} \cdot \left| i + \max(\tau_N) \cdot \frac{di}{dt} \right| > \max(G_{Extra}) = \frac{\sqrt{2}}{\min(\cos\varphi_N)} \qquad (2a)$$

und

$$\frac{1}{I_N}\cdot\left|i+\min(\tau_N)\cdot\frac{di}{dt}\right| > \min(G_{Extra}) = \frac{\sqrt{2}}{\max(\cos\varphi_N)} \qquad (2b)$$

wobei

IN: Nennstrom (Effektivwert)
$\varphi_N$: Phasenverschiebung des Nennstromkreises
$\tau_N$: Zeitkonstante des Nennstromkreises = tan($\varphi_N$)/(2πf)
$G_{Extra}$: Auslöse-Grenzwert

bedeuten.

3. Verfahren nach Anspruch 1 und 2, **dadurch gekennzeichnet, daß** das vereinfachte Abschaltkriterium durch eine Einhüllende in Form eines Polygonzuges gebildet wird.

4. Verfahren nach Anspruch 1 und 3, **dadurch gekennzeichnet, daß** der Polygonzug durch die Schnittpunkte von Tangenten gebildet wird, die an signifikanten Punkten der Einhüllenden gelegt sind.

5. Verfahren nach Anspruch 4, **dadurch gekennzeichnet, daß** die signifikanten Punkte der maximale Stromwert, der Schnittpunkt der aus den Grenzleistungsfaktoren resultierenden Extrapolationskritierien, des maximalen Stromanstieges, des maximalen Stromes sowie deren spiegelsymmetrische Projektion sind.

6. Verfahren nach Anspruch 5, **dadurch gekennzeichnet, daß** sich die Koordinaten des maximalen und minimalen Stromwertes aus $\kappa\cdot\sqrt{2}\cdot I_{Nenn}$ ergeben, wobei $\kappa$ den auf den unteren Leistungsfaktor bezogenen Stoßfaktor darstellt.

7. Verfahren nach Anspruch 5, **dadurch gekennzeichnet, daß** der Schnittpunkt der aus den Grenzleistungsfaktoren resultierenden Extrapolationskriterien durch folgende Beziehungen ermittelt wird:

$$\frac{I_2}{I_N} = \sqrt{2}\cdot\frac{\sin\varphi_u - \sin\varphi_o}{\sin(\varphi_u - \varphi_o)} \qquad (3a)$$

$$\frac{(dI/dt)_2}{\omega\cdot I_N} = \frac{\sqrt{2}}{\sin\varphi_u} - \frac{I_2}{I_N\cdot\tan\varphi_u} \qquad (3b)$$

wobei

$(dI/dt)_2$: die Stromsteilheit im Schnittpunkt der beiden Extrapolationsgeraden
$I_2$: der Strom im Schnittpunkt der beiden Extrapolationskriterien
$\omega$: die Netz-Kreisfrequenz
$\varphi_u$: die Phasenverschiebung zwischen Strom und Spannung bei Anwendung des unteren Leistungsfaktors
$\varphi_o$: die Phasenverschiebung zwischen Strom und Spannung bei Anwendung des oberen Leistungsfaktors

bedeuten.

8. Verfahren nach Anspruch 5, **dadurch gekennzeichnet, daß** der Punkt des maximalen Stromanstieges durch folgende Beziehung ermittelt wird:

7

- für 2·cos$\varphi_u$ < cos$\varphi_o$

$$\frac{(dI/dt)_3}{\omega \cdot I_N} = \frac{\sqrt{2} \cdot \left[ \sin \psi_{max} - \cos \varphi_o \cdot \sin(\psi_{max} - \varphi_u) \right]}{\sin \varphi_o} \qquad (4a)$$

$$\frac{I_3}{I_N} = \frac{\sqrt{2}}{\cos \varphi_u} - \frac{(dI/dt)_3}{\omega \cdot I_N} \cdot \frac{1}{\tan \varphi_o} \qquad (4b)$$

- für 2·cos$\varphi_u$ >= cos$\varphi_o$

$$\frac{(dI/dt)_3}{\omega \cdot I_N} = \frac{\sqrt{2}}{\sin \varphi_o} \qquad (4a)$$

$$\frac{I_3}{I_N} = \frac{\sqrt{2}}{\cos \varphi_o} - \frac{(dI/dt)_3}{\omega \cdot I_N} \cdot \frac{1}{\tan \varphi_o} \qquad (4b)$$

wobei

$(dI/dt)_3$: die maximale Stromsteilheit
$I_3$: der Strom bei maximaler Stromsteilheit
$\psi_{max}$: der auf die Spannung bezogene Schaltwinkel mit nachfolgend maximaler Stromsteilheit gemäß

$$\psi_{max} = \arctan\left( \frac{1 - \cos \varphi_o \cdot \cos \varphi_u}{\cos \varphi_o \cdot \sin \varphi_u} \right) \qquad (5)$$

bedeuten.

9. Anordnung mit Mitteln zur Durchführung des Verfahrens nach Anspruch 1 oder einem der Ansprüche 2 bis 8 mit Auswertemitteln, die analog, digital und/oder hybrid ausgelegt sind, mit einem Sensor (41) zur Messung der Stromsteilheit, dem ein Filter (42), ein Analog-Digital-Wandler (43), eine Einheit zur Pegelanpassung (44) nachgeschaltet ist, von der ein erstes Signal für die Stromsteilheit (di/dt) und über eine Summiereinheit (45) ein zweites Signal für den Augenblickswert des Stromes (i) auf eine digital arbeitende Auswerteeinheit (46) mit darin abgespeicherten Toleranten-Ortskurven-Kriterium (TOK) gegeben wird.

10. Anordnung nach Anspruch 9, **dadurch gekennzeichnet, daß** der Sensor zur Messung der Stromsteilheit eine Rogowski-Spule (41) ist.

11. Anordnung nach Anspruch 9, **dadurch gekennzeichnet, daß** das Filter ein Antialiasing-Filter (42) ist.

12. Anordnung nach Anspruch 9, **dadurch gekennzeichnet, daß** von der Auswerteeinheit (6) ein Auslöser (47) angesteuert wird.

**Claims**

1. Method for detecting short circuits in low-voltage networks using selected switching criteria, in particular the instantaneous value of the current (i) and the current steepness (di/dt) being recorded and used as disconnection criteria, to which end the current steepness (di/dt) is represented as a function of the current (i) and in said locus curve representation envelopes are derived which enclose all the locus curves which are possible in normal operation, wherein by overlaying the envelopes a resulting envelope is formed which in addition to different switching times and power factors takes account of an arbitrary initial current within the normal operating range, for which purpose

- first of all, separate envelopes are formed for the lower power factor on the one hand and the upper power factor on the other hand, all switching angles being enclosed in each case,
- in addition, a further envelope is determined which takes account of the rated-current switching operations between the two power factor limits,
- the envelopes thus obtained are combined and superimposed to form the resulting envelope which embodies a tolerant locus curve (TLC) criterion which is independent of the power factor and the initial current,

and a short circuit is indicated if values outside the tolerant locus curve criterion (TLC) occur.

2. Method according to claim 1, **characterised in that** the disconnection criterion is simplified by expansion of extrapolation criteria and a short circuit is detected when the extrapolation criterion for both limit values of the power factor interval is satisfied, whereby the following equations apply:

$$\frac{1}{I_N} \cdot \left| i + \max(\tau_N) \cdot \frac{di}{dt} \right| > \max(G_{Extra}) = \frac{\sqrt{2}}{\min(\cos\varphi_N)} \qquad (2a)$$

$$\frac{1}{I_N} \cdot \left| i + \min(\tau_N) \cdot \frac{di}{dt} \right| > \min(G_{Extra}) = \frac{\sqrt{2}}{\max(\cos\varphi_N)} \qquad (2b)$$

where

$I_N$: is the rated current (root-mean-square value)
$\varphi_N$: is the phase shift of the rated current circuit
$\tau_N$: is the time constant of the rated current circuit = $\tan(\varphi_N)/(2\pi f)$
$G_{Extra}$: is the tripping limit value.

3. Method according to claim 1 and 2, **characterised in that** the simplified disconnection criterion is formed by an envelope in the form of a polygon.

4. Method according to claim 1 and 3, **characterised in that** the polygon is formed by the intersection points of tangents which are placed at significant points of the envelope.

5. Method according to claim 4, **characterised in that** the significant points are the maximum current value, the intersection point of the extrapolation criteria resulting from the power factor limits, the maximum current steepness, the maximum current and the mirror-symmetrical projection thereof.

6. Method according to claim 5, **characterised in that** the coordinates of the maximum and minimum current value are derived from $\kappa \cdot \sqrt{2} \cdot I_{Rated}$, where $\kappa$ represents the surge factor referred to the lower power factor.

7. Method according to claim 5, **characterised in that** the intersection point of the extrapolation criteria resulting from the power factor limits is determined by means of the following relationships:

$$\frac{I_2}{I_N} = \sqrt{2} \cdot \frac{\sin\varphi_u - \sin\varphi_o}{\sin(\varphi_u - \varphi_o)} \qquad (3a)$$

$$\frac{(dI/dt)_2}{\omega \cdot I_N} = \frac{\sqrt{2}}{\sin\varphi_u} - \frac{I_2}{I_N \cdot \tan\varphi_u} \qquad (3b)$$

where

$(dI/dt)_2$: is the current steepness at the point of intersection of the two straight extrapolation lines,
$\omega$ is the network angular frequency
$\varphi_u$: is the phase shift between current and voltage when the lower power factor is used
$\varphi_o$: is the phase shift between current and voltage when the upper power factor is used.

**8.** Method according to claim 5, **characterised in that** the point of the maximum current steepness is determined by means of the following relationship:

- for $2 \cdot \cos\varphi_u < \cos\varphi_o$

$$\frac{(dI/dt)_3}{\omega \cdot I_N} = \frac{\sqrt{2 \cdot [\sin\psi_{max} - \cos\varphi_o \cdot \sin(\psi_{max} - \varphi_u)]}}{\sin\varphi_o} \qquad (4a)$$

$$\frac{I_3}{I_N} = \frac{\sqrt{2}}{\cos\varphi_o} - \frac{(dI/dt)_3}{\omega \cdot I_N} \cdot \frac{1}{\tan\varphi_o} \qquad (4b)$$

for $2 \cdot \cos\varphi_u > \cos\varphi_o$

$$\frac{(dI/dt)_3}{\omega \cdot I_N} = \frac{\sqrt{2}}{\sin\varphi_o} \qquad (4a)$$

$$\frac{I_3}{I_N} = \frac{\sqrt{2}}{\cos\varphi_o} - \frac{(dI/dt)_3}{\omega \cdot I_N} \cdot \frac{1}{\tan\varphi_o} \qquad (4b)$$

where

$(dI/dt)_3$: is the maximum current steepness
$I_3$: is the current at maximum current steepness
$\psi_{max}$: is the switching angle referred to the voltage with subsequent maximum current steepness according to

$$\psi_{\max} = \arctan\left(\frac{1 - \cos\varphi_o \cdot \cos\varphi_u}{\cos\varphi_o \cdot \sin\varphi_u}\right) \qquad (5)$$

9. Arrangement having means for performing the method according to claim 1 or one of the claims 2 to 9 [sic], comprising evaluation means which are embodied in analogue, digital and/or hybrid form, having a sensor (41) for measuring the current steepness, downstream of which sensor are connected a filter (42), an analogue-digital converter (43) and a level matching unit (44) by which a first signal representing the current steepness (di/dt) and, via an adder unit (45), a second signal representing the instantaneous value of the current (i) are generated and supplied to a digitally operating evaluation unit (46) in which there is stored a tolerant locus curve criterion (TOK).

10. Arrangement according to claim 9, **characterised in that** the sensor for measuring the current steepness is a Rogowski coil (41).

11. Arrangement according to claim 9, **characterised in that** the filter is an anti-aliasing filter (42).

12. Arrangement according to claim 9, **characterised in that** a release or trigger is actuated by the evaluation unit (6).

## Revendications

1. Procédé de détection de courts-circuits dans des réseaux à basse tension, utilisant des critères de commutation sélectionnés, la valeur instantanée du courant (i) et la pente de courant (di / dt) étant acquises et utilisées comme critères de coupure, la pente de courant (di / dt) étant représentée en fonction du courant (i) et, dans cette représentation de lieux géométriques, des enveloppantes étant déduites, lesquelles incluent tous les lieux géométriques possibles en fonctionnement normal, une enveloppante résultante étant formée par superposition des enveloppantes, laquelle prend en compte outre différents instants de commutation et facteurs de puissance un courant de polarisation quelconque à l'intérieur de la plage de fonctionnement normal, ce pour quoi

   - on forme d'abord des enveloppantes séparées pour le facteur de puissance inférieur d'une part et pour le facteur de puissance supérieur d'autre part, tous les angles de commutation étant inclus à chaque fois,
   - on détermine en plus une autre enveloppante qui prend en compte les commutations de courant nominal entre deux facteurs de puissance limites,
   - on réunit les enveloppantes ainsi obtenues et on les superpose en une enveloppante résultante qui matérialise un critère de lieux géométriques de tolérance (TOK) qui est indépendant du facteur de puissance et du courant de polarisation,

   un court-circuit étant signalé pour des valeurs en dehor du critère de lieux géométriques de tolérance (TOK).

2. Procédé selon la revendication 1, **caractérisé par le fait qu'**on simplifie le critère de coupure en étendant des critères d'extrapolation et qu'on détecte un court-circuit lorsque le critère d'extrapolation est satisfait pour les deux valeurs limites de l'intervalle de facteur de puissance, les formules suivantes étant valables :

$$\frac{I}{I_N} \cdot \left| i + \max(\tau_N) \cdot \frac{di}{dt} \right| > \max(G_{Extra}) = \frac{\sqrt{2}}{\min(\cos\varphi_N)} \qquad (2a)$$

et

$$\frac{I}{I_N} \cdot \left| i + \min(\tau_N) \cdot \frac{di}{dt} \right| > \min(G_{Extra}) = \frac{\sqrt{2}}{\max(\cos\varphi_N)} \qquad (2b)$$

avec

$I_N$ : courant nominal (valeur efficace)

$\varphi_N$ : déphasage du circuit de courant nominal

$\tau_N$ : constante de temps du circuit de courant nominal = $\tan((\varphi_N)) / (2\pi f)$

$G_{Extra}$ : valeur limite de déclenchement.

**3.** Procédé selon les revendications 1 et 2, **caractérisé par le fait qu'**on forme le critère de coupure simplifié avec une enveloppante sous la forme d'un tracé polygonal.

**4.** Procédé selon les revendications 1 et 3, **caractérisé par le fait qu'**on forme le tracé polygonal avec les points d'intersection de tangentes qui sont placées à des points significatifs de l'enveloppante.

**5.** Procédé selon la revendication 4, **caractérisé par le fait que** les points significatifs sont la valeur de courant maximale, le point d'intersection des critères d'extrapolation résultant des facteurs de puissance limites, l'augmentation maximale de courant, le courant maximal et sa projection symétrique.

**6.** Procédé selon la revendication 5, **caractérisé par le fait que** les coordonnées de la valeur de courant maximale et minimale se déduisent de $\kappa \cdot \sqrt{2} \cdot I_{Nenn}$, $\kappa$ représentant le facteur de choc se rapportant au facteur de puissance inférieur.

**7.** Procédé selon la revendication 5, **caractérisé par le fait qu'**on détermine le point d'intersection des critères d'extrapolation résultant des facteurs de puissance limites au moyen des relations suivantes

$$\frac{I_2}{I_N} = \sqrt{2} \cdot \frac{\sin\varphi_u - \sin\varphi_o}{\sin(\varphi_u - \varphi_o)}$$

$$(3a)$$

$$\frac{(dI/dt)_2}{\omega \cdot I_N} = \frac{\sqrt{2}}{\sin\varphi_u} - \frac{I_2}{I_N \cdot \tan\varphi_u}$$

$$(3b)$$

avec

$(dI/dt)_2$ : la pente de courant au point d'intersection des deux droites d'extrapolation

$I_2$ : le courant au point d'intersection des deux droites d'extrapolation

$\omega$ : la fréquence angulaire de réseau

$\varphi_u$ : le déphasage entre courant et tension lors de l'application du facteur de puissance inférieur

$\varphi_o$ : le déphasage entre courant et tension lors de l'application du facteur de puissance supérieur.

**8.** Procédé selon la revendication 5, **caractérisé par le fait qu'**on détermine le point de l'augmentation maximale de courant au moyen de la relation suivante :

- pour $2 \cdot \cos\varphi_u < \cos\varphi_o$

$$\frac{(dI/dt)_3}{\omega \cdot I_N} = \frac{\sqrt{2} \cdot \left[\sin\psi_{max} - \cos\varphi_o \cdot \sin(\psi_{max} - \varphi_u)\right]}{\sin\varphi_o} \qquad (4a)$$

$$\frac{I_3}{I_N} = \frac{\sqrt{2}}{\cos\varphi_O} - \frac{(dI/dt)_3}{\omega \cdot I_N} \cdot \frac{I}{\tan\varphi_O}$$

(4b)

- pour $2 \cdot \cos\varphi_u >= \cos\varphi_o$

$$\frac{(dI/dt)_3}{\omega \cdot I_N} = \frac{\sqrt{2}}{\sin\varphi_O}$$

(4a)

$$\frac{I_3}{I_N} = \frac{\sqrt{2}}{\cos\varphi_O} - \frac{(dI/dt)_3}{\omega \cdot I_N} \cdot \frac{I}{\tan\varphi_O}$$

(4b)

avec

$(dI/dt)_3$ : la pente de courant maximale

$I_3$ : le courant pour la pente de courant maximale

$\psi_{max}$ : l'angle de commutation se rapportant à la tension avec la pente de courant maximale suivante selon

$$\psi_{max} = \arctan\left(\frac{I - \cos\varphi_O \cdot \cos\varphi_u}{\cos\varphi_O \cdot \sin\varphi_u}\right) \qquad (5)$$

9. Dispositif comportant des moyens pour la mise en oeuvre du procédé selon la revendication 1 ou selon l'une des revendications 2 à 9 avec des moyens d'évaluation, qui sont conçus sous forme analogique, numérique et/ou hybride, avec un capteur (41) qui est destiné à la mesure de la pente de courant et du côté aval duquel sont branchés un filtre (42), un convertisseur analogique-numérique (43) et une unité d'adaptation de niveau (44), par laquelle un premier signal pour la pente de courant (di/dt) et par l'intermédiaire d'une unité d'addition (45) un deuxième signal pour la valeur instantanée du courant (i) sont envoyés à une unité d'évaluation (46) travaillant de façon numérique avec critère de lieux géométriques de tolérance (TOK) mémorisé à l'intérieur.

10. Dispositif selon la revendication 9, **caractérisé par le fait que** le capteur destiné à la mesure de la pente de courant est une bobine de Rogovski (41).

11. Dispositif selon la revendication 9, **caractérisé par le fait que** le filtre est un filtre anti-repliement (42).

12. Dispositif selon la revendication 9, **caractérisé par le fait qu'**un déclencheur (47) est commandé par l'unité d'évaluation (6).

FIG 1

**FIG 2**

FIG 3

FIG 4